# EUROPEAN PATENT APPLICATION

(11) **EP 4 252 939 A1**
(43) Date of publication of application: **04.10.2023**
(21) Application number: 22165818.0
(22) Date of filing: 31.03.2022
(51) Int. Cl.: B22F 10/28, B22F 10/362, B22F 10/368, B22F 10/80, B29C 64/153, B29C 64/268, B33Y 40/10, B33Y 50/00

(54) **BEAM POWDER BED FUSION ADDITIVE MANUFACTURING PROCESS AND MANUFACTURING DEVICE FOR AN EXECUTION OF THE PROCESS**

(71) Applicant: Siemens Aktiengesellschaft, 80333 München (DE)
(72) Inventor: Drendel, Jan, 13355 Berlin (DE); Heinrichsdorff, Frank, 14513 Teltow (DE); Logvinov, Ruslan, 95447 Bayreuth (DE)
(74) Representative: Siemens Patent Attorneys

(57) **Abstract**

With the invention a beam powder bed fusion additive manufacturing process of a component by applying of at least one substrate layer with at least one layer material on a substrate surface of a substrate with following steps is provided: Arranging of at least one precursor layer with at least one powdery precursor material of the layer material on the substrate surface of the substrate and fusion of the powdery precursor material with introduction of fusion thermal energy into the powdery precursor material with the aid of at least one fusion beam such that the substrate layer on the substrate surface is formed. The process is characterized in that with the aid of at least one scanning beam a heating of at least one manufacturing part of the component by introduction of heating energy into the manufacturing part is carried out such that a substantially homogenous temperature distribution of the manufacturing part during the fusion results. The manufacturing part is the substrate, the substrate layer or the precursor layer. With the aid of the scanning beam a controlled heating of the manufacturing part is carried out. For that preferably following additional steps are carried out: Determining of a heat flux density distribution of the manufacturing part and generation of a scan pattern concerning the determined heat flux density distribution. Preferably, a heat flux density distribution to modulate the range of the heating parameter is used which is computed by a numeric simulation. Besides the process a respective manufacturing device is disclosed. The invention is used for building a three-dimensional object on the substrate surface of the substrate.

## Description

### BACKGROUND OF THE INVENTION

### 1. Field of the invention

The patent application relates to a beam powder bed fusion additive manufacturing process and a manufacturing device for an execution of the beam powder bed fusion additive manufacturing process.

### 2. Description of the related art

The beam powder bed fusion additive manufacturing process is a method for manufacturing (building) a three-dimensional object on a substrate surface of a substrate (e.g. a substrate plate), whereby a number of substrate layers with layer materials are applied on top of each other.

For an applying of a substrate layer on the substrate surface of the substrate (or of a previously on the substrate surface already applied substrate layer) following steps are carried out: Arranging of a precursor layer with powdery precursor material of layer material on the substrate surface of the substrate and fusion of the powdery precursor material by introduction of fusion thermal energy (heat) into the powdery precursor material such that the substrate layer on the substrate surface is formed. The introduction of the fusion thermal energy is at least partly carried out by scanning of the precursor layer with at least one scanning beam.

The powder bed fusion additive manufacturing process is a complex process. For this complex process characteristics of the object which is built on a substrate, of the substrate, of a used powder bed and of an environment of the substrate and of the object are important. Heat fluxes of the system are based on the power supplied by the beam and are based on the power which is used for a heating of the substrate. In addition, heat is lost through convection and radiation at the substrate surface and through heat conduction into the powder bed. These boundary conditions change during the manufacturing process. For instance, cross-sections of the built object change and a contact area of the bed increases with an increasing height of the built object.

For instance, the beam powder bed fusion additive manufacturing process is high temperature (HT) laser-powder bed fusion (L-PBF). HT L-PBF is carried out at temperatures above 500 °C (T >> 500°C) with the aid of a laser beam. Typical layer materials are nickel-based superalloys, tool steels, ceramics and intermetallic alloys. With a pre-heated substrate plate it is not possible to maintain a pre-heat temperature for increasing heights of a built object. An object being built with this process typically has to be smaller than 20 mm, because the temperature from the substrate plate does not sufficiently reach the applied substrate layer if a distance between the substrate layer and the substrate surface is too high.

In general, the beam powder bed fusion additive manufacturing process has at least following problems: A surface temperature can change during a manufacturing process (different spatial and temporal average temperature in different layers). In Addition, the geometry of the layers being built previously to each layer can lead to a spatially non-homogeneous temperature field in a single layer (different temperatures at different locations in a single layer). The higher the process temperature (pre-heat temperature) is, the more severe are these problems. A complex geometry of the manufactured object can lead in an enhancing of these problems.

### SUMMARY OF THE INVENTION

It is an object of the invention to provide a beam powder bed fusion additive manufacturing process without the described problems. A further object of the invention is the providing of a respective manufacturing device for an execution of the process.

These objects are achieved by the invention specified in the claims.

Concerning a first aspect of the invention a beam powder bed fusion additive manufacturing process of a component by applying of at least one substrate layer with at least one layer material on a substrate surface of a substrate with following steps is provided: Arranging of at least one precursor layer with at least one powdery precursor material of the layer material on the substrate surface of the substrate and fusion of the powdery precursor material through introduction of fusion thermal energy into the powdery precursor material with the aid of at least one fusion beam such that the substrate layer on the substrate surface is formed. The process is characterized in that with the aid of at least one scanning beam a heating of at least one manufacturing part of the component by introduction of heating energy into the manufacturing part is carried out such that a substantially homogenous temperature distribution of the manufacturing part during the fusion results. Any desired manufacturing part can be used. But preferably, the manufacturing part is selected from the group consisting of the substrate, the substrate layer and the precursor layer. So, with the aid of the scanning beam a controlled heating of the substrate, the substrate surface and/or the precursor layer during the fusion is carried out.

With the invention, the temperature distribution in the manufacturing part can be controlled during the fusion of the powdery precursor material. The temperature distribution in the manufacturing part is homogenous (uniform). So, the temperatures of adjacent areas of the manufacturing part are equal or nearly equal. Just small deviations of the temperatures of adjacent areas of under 10% and preferably under 5% are possible. For instance, the deviation of the temperatures of adjacent areas of manufacturing part is 1%.

With respect to the beam powder bed fusion additive manufacturing process preferably following additional steps are carried out: Determining of a heat flux density distribution of the manufacturing part and generation of a scan pattern by supplying the determined heat flux density distribution. The distribution of the heat flux density (heat flux, thermal flux, heat-flow density, heat flow rate intensity) is the flow of energy per unit of the area of the substrate surface and per unit of time (q(x,y,t)) . The heat flux density of the impinging scanning beam influences a temperature of the substrate surface, a temperature of the substrate layer and/or a temperature of the precursor layer. Hence, in a preferred embodiment a fusion parameter is used which comprises a temperature of manufacturing part.

Concerning a further aspect of the invention a manufacturing device for an execution of the powder fusion additive manufacturing process is provided. The manufacturing device is characterized in that with the aid of the scanning beam the heating of the manufacturing part of the component by introduction of the heating energy into the manufacturing part is carried out such that the substantially homogenous temperature distribution of the manufacturing part during the fusion can result.

For the beam powder bed fusion additive manufacturing process a number of substrate layers (at least two substrate layers) can be stacked. For that, at least two precursor layers are applied one above the other. For each of the substrate layers a precursor layer with powdery precursor material is arranged which is subsequently fused.

The substrate layer material is preferably an inorganic material (metallic or ceramic material). The powdery precursor material can be inorganic or organic, too.

The powdery precursor material is transformed into the layer material by introduction of the fusion energy. The transformation of the powdery precursor material into the layer material can be based on a chemical reaction of the powdery precursor material (e.g. a redox reaction) and/or on a physical reaction of the powdery precursor material (e.g. a melting).

Just one kind of the layer material and/or just one kind of the powdery precursor material can be used. Mixtures thereof are possible, too. For instance, the layer material of the resulting substrate layer comprises a metal alloy which is formed by two or more powdery precursor materials.

For the introduction of the thermal energy into the manufacturing part an additional (separate) source of the thermal energy can be used. For instance, additional thermal energy is introduced by thermal conduction. The introduction of the additional thermal energy can be done before, during and/or after every step of the beam powder bed fusion additive manufacturing process. For instance, it is possible to introduce the additional thermal energy initially just into the substrate before the arranging of the powdery material on the substrate surface of the substrate. By this, the substrate and the substrate surface are preheated.

The substrate surface is formed by the substrate. An already applied substrate layer on the substrate can form the substrate surface, too.

Any desired and/or appropriate substrate material of the substrate is possible. For instance, the substrate material comprises at least one ceramic substrate material and/or a at least one metallic substrate material. Mixtures of different substrate materials are possible, too.

Concerning the layer material, just one layer material and/or just one powdery precursor material can be used. A use of mixtures thereof is possible, too. The powdery precursor material can be a metallic powder material. The use of chemical compounds is possible, too. For instance, the powdery precursor material comprises an oxide-compound of a metal and/or a carbonate-compound of a metal.

For the fusion and for the heating different beams can be used. But it is preferrable to use a single source for both beams. Therefore, in a specific embodiment, a source of the scanning beam is used as a source of the fusion beam. The scanning beam and the fusion beams comprise electromagnetic radiation and/or particle radiation. Hence, in a preferred embodiment, a scanning beam and/or a fusion beam are used which comprise at least one beam which is selected from the group consisting of a laser beam and an electron beam. Ionic beams are possible, too.

The heating of the manufacturing part is carried out more or less independently from the fusion and it can be conducted during, before or after every step of the beam powder bed fusion additive manufacturing process. In a preferred embodiment, the heating is carried out before the arranging of the precursor layer and/or before the fusion of the powdery precursor material of the precursor layer. During and/or after the fusion of the powdery precursor material the heating can be carried out, too.

Preferably, an amount of the introduced heating energy is spatially and/or temporally modulated to supply the heat flux density distribution. So, the manufacturing process is flexible and can be adapted to any desired component. For that, at least one beam characteristic of the heating beam is controlled which is selected from the group consisting of beam power, beam velocity and hatch distance.

The beam velocity (scan velocity) is the velocity with which the manufacturing part is scanned by the (impinging) scanning beam. The hatch distance is the distance of neighboring vectors along which the scanning beam impeaches the manufacturing part.

By the controlling of at least one of these beam characteristics it is possible to supply/modulate an amount of thermal energy which is introduced into the manufacturing part.

In a preferred embodiment a high temperature selective melting with a pre-heat temperature of the powdery precursor material of more than 500 °C is carried out. But lower pre-heat temperatures are possible, too.

It is advantageous to get an automated beam powder bed fusion additive manufacturing process. Therefore, in a preferred embodiment a processor with a job file is used, wherein the job file comprises information about at least one dimension of the substrate and/or about at least one dimension of the substrate layer, about a range of the fusion parameter and/or about manufacturing part. The job file comprises vectors with corresponding information (beam velocity, beam power, ...) for melting of the powdery precursor material of the precursor layer. With the information about dimensions of the manufacturing parts information about a geometry of the manufacturing parts of process are provided.

Preferably, a heat flux density distribution to modulate the range of the heating parameter for the heating is used which is computed by a numeric simulation.

The process is used for the manufacturing of any desired product. So, in a preferred embodiment, at least one three-dimensional object is built on the substrate surface of the substrate. Thereby the substrate and the tree-dimensional object can be separably or inseparably connected at the end of the beam powder bed fusion additive manufacturing process.

Following advantages of the invention can be stressed:
- With the aid of the invention it is possible to accurately and reliably build a three-dimensional object.
- By controlling of the surface temperature of built objects and by taking changes of the geometry of built parts increasing build heights are possible.
- Reducing of defects in the fused material is possible.
- Avoiding of process interruption or premature termination of the process due to abnormal deformation of the geometry introduced by defects in the fused material.
- A defined (stable) beam powder bed fusion additive process is possible.
- Due to the additional, geometry-tailored heat input the limit for a height of the three-dimensional object is heavily increased.
- The manufacturing process can be automated.

### BRIEF DESCRIPTION OF THE DRAWINGS

Further features and advantages of the invention are produced from the description of an exemplary embodiment with reference to the drawings. The drawings are schematic.

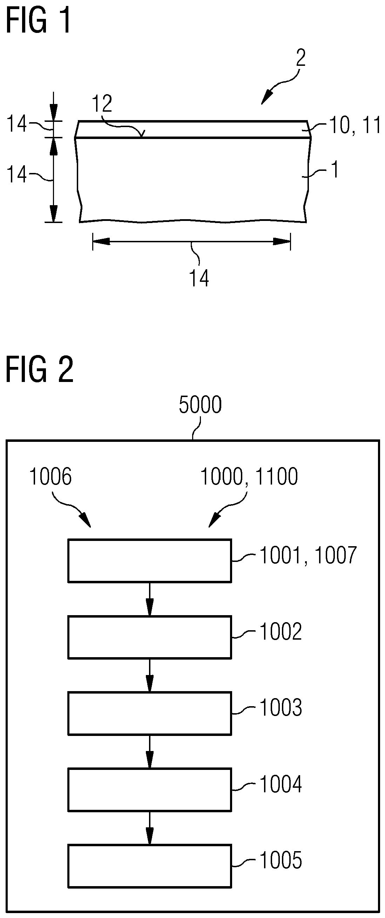

Figure 1 shows a substrate with an applied substrate layer on a substrate surface of the substrate.
Figures 2 shows a beam powder bed fusion additive manufacturing process and a manufacturing device for an execution of the process.

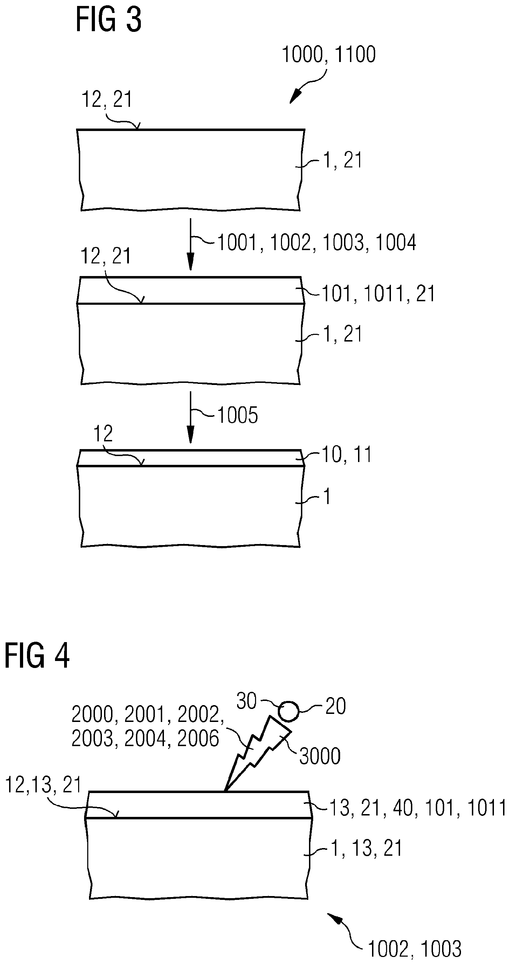

Figures 3 and 4 show details of the beam powder bed fusion additive manufacturing process.
Figure 5 shows scan patterns of the beam powder bed fusion additive manufacturing process.
Figure 6 shows a processor of the beam powder bed fusion manufacturing process.

### DETAILED DESCRIPTION OF THE INVENTION

Provided are a beam powder bed fusion additive manufacturing process 1000 of a component 2 by applying of a substrate layer 10 with a layer material 11 on a substrate surface 12 of a substrate 1 and a manufacturing device 5000 for the execution of the beam powder bed fusion additive manufacturing process. In a further, not shown embodiment for the building of the component 2 a couple of substrate layers are applied above each other. By that, a number of precursor layers are stacked and the here described beam powder bed fusion additive manufacturing process es repeated carried out.

The beam powder bed fusion additive manufacturing process comprises following steps:
- Arranging 1004 of a precursor layer 101 with powdery precursor material 1011 of the layer material 11 on the substrate surface 12 of the substrate 1 and
- Fusion 1005 of the powdery precursor material 1011 with introduction of fusion thermal energy into the powdery precursor material 1011 with the aid of at fusion beam 3000 such that the substrate layer 10 on the substrate surface 12 is formed.

Following additional process steps are carried out:
- Determining 1001 of a heat flux density distribution 40 of the manufacturing part 21 and
- Generation 1002 of a scan pattern 50 supplying the determined heat flux density distribution 40.

With the aid of a scanning beam 2000 a heating 1003 of a manufacturing part 21 of the component 2 is carried out by introduction of heating energy 2001 into the manufacturing part 21 such that a substantially homogenous surface temperature distribution 13 of the manufacturing part 21 during the fusion 1005 results.

The manufacturing part 21 is a precursor layer 101 of the substrate layer 10.

The heating (introduction of the heating energy)1003 is carried out by scanning of the substrate surface 12 with a scanning beam 2000 after the application of the precursor layer 101. The scanning beam 2000 comprises a laser beam 2004. In a further embodiment, the scanning beam 2000 comprises an electron beam 2003.

The used heating parameter 2006 comprises a heat flux density distribution 40 of the precursor layer 101. The heat flux density distribution is caused by the scanning 2000.

The beam powder bed fusion additive manufacturing process 1000 comprises a high temperature selective melting of the powdery precursor material with a pre-heat temperature of more than 500 °C.

The beam powder bed fusion additive manufacturing process 1000 is automated. For that, a processor 4000 with a job file 4001 is used. The job file 4001 comprises information about a dimension 14 of the manufacturing part 21, about a range of the fusion parameter 1006 and about the heat flux density distribution 40 of the manufacturing part 21.

The job file 4001 comprises vectors with corresponding information (beam velocity, beam power, ...) for melting and for heating of the powdery precursor material of the precursor layer. With the information about dimensions of the manufacturing part information about a geometry of the manufacturing partis is provided.

The automated beam powder bed fusion process 1000 uses a numeric simulation 1007. The simulation is used to modulate the range of the heating parameters 2006 for the heating 1003.

With the aid of the beam powder bed fusion additive manufacturing process 1000 a three-dimensional object (component) 2 on the substrate surface 12 of the substrate 1 is built.

For the process a heating of the substrate surface 12 of the parts is carried out using the scanning beam 2000 (the same is used as fusion beam 3000 for melting of the powder precursor material. Alternatively, different beams are used.

In order to add the correct amount of heat to the thermal system (to create a homogeneous surface temperature across all layers) a new build processor has been developed. Surfaces of the parts are directly heated by radiation using an energy (scanning) beam 2000 (the same used for melting or a different one).

For the automation a job-file 4001 with vectors and corresponding information (beam velocity, beam power) for melting of the powdery precursor material 1011 of the precursor layer 101 is created. This is done for each powdery precursor material of for each of the precursor layers, respectively.

The job file 4001 comprises information about dimensions 14 of the substrate 1 and of the substrate layer 10, a range of the fusion parameter 1006 and a heat flux density distribution 40 of the manufacturing part 21.

The heat flux density distribution 40 is computed by a numeric simulation. This one is used for heating the substrate surface 12 not melting it (e.g. in an additional step after melting or parallel to melting using a second beam). The vector positions and corresponding parameters (beam power, beam velocity) have been automatically chosen from inside the given parameter ranges to meet the desired *q̇*(*x*,*y*,*t*) in the precursor layer 101.Possible parameters to modulate are
- the beam power (increased beam power = increased heat input at a location)
- the beam velocity (increased velocity = decreased heat input at a location)
- the hatch distance between neighboring vectors (increased hatch distance = de-creased heat input at a location).

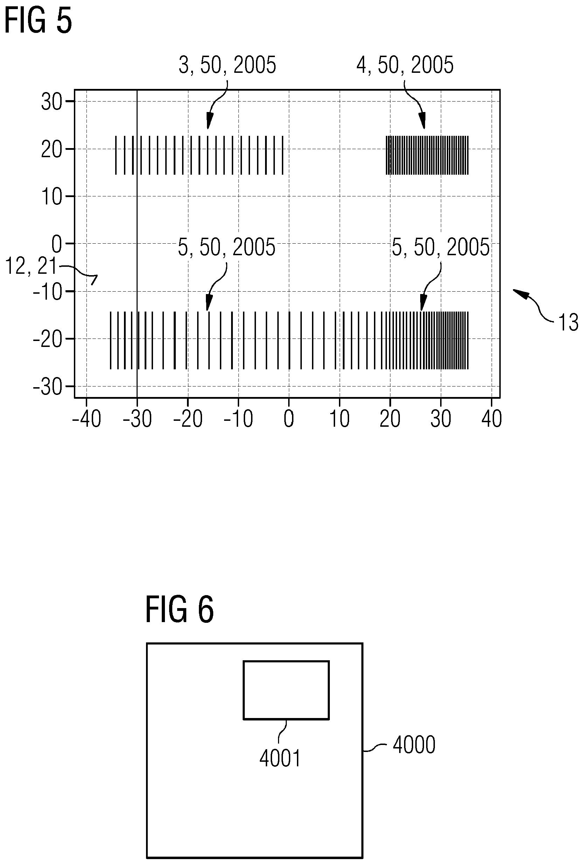

The last one is depicted in figure 5. By that, vectors of the job file 4001 can be seen. A hatch modulation for the precursor layer comprising three parts 3, 4 and 5. Beam power and velocity are equal for all vectors. Regions with a smaller hatch distance are subject to a larger heat flux density.

A combination of hatch distance 2005 and velocity modulation (modulation of the beam velocity) is carried out for the SLM process: Hatch distance modulation is used to coarsely adjust the heat input to *q̇*(*x*,*y*,*t*). The fine tuning is done using velocity modulation. For systems with a larger maximum scan velocity (e.g. electron beam melting machines) pure velocity modulation is possible.

## Claims

1. Beam powder bed fusion additive manufacturing process (1000) of a component (2) by applying of at least one substrate layer (10) with at least one layer material (11) on a substrate surface (12) of a substrate (1) with following steps:
- arranging (1004) of at least one precursor layer (101) with at least one powdery precursor material (1011) of the layer material (11) on the substrate surface (12) of the substrate (1); and
- fusion (1005) of the powdery precursor material (1011) through introduction of fusion thermal energy into the powdery precursor material (1011) with the aid of at least one fusion beam (3000) such that the substrate layer (10) on the substrate surface (12) is formed;
**characterized in that**
- with the aid of at least one scanning beam (2000) a heating (1003) of at least one manufacturing part (21) of the component (2) by introduction of heating energy (2001) into the manufacturing part (21) is carried out such that a substantially homogenous temperature distribution (13) of the manufacturing part (21) during the fusion (1005) results.

2. Beam powder bed fusion additive manufacturing process according to claim 1, wherein a manufacturing part (21) is used which is selected from the group consisting of the substrate (1), the substrate surface (12) and the precursor layer (101.

3. Beam powder bed fusion additive manufacturing process according to claim 1 or 2, wherein following additional steps are carried out:
- determining (1001) of a heat flux density distribution (40) of the manufacturing part (21) and
- generation (1002) of a scan pattern (50) by supplying the determined heat flux density distribution (40).

4. Beam powder bed fusion additive manufacturing process according to one of the claims 1 to 3, wherein the heating (1003) is carried out before the arranging (1004) of the precursor layer (101) and/or before the fusion (1005) of the powdery precursor material (1011) of the precursor layer (101) .

5. Beam powder bed fusion additive manufacturing process according to one of the claims 1 to 4, wherein a source (20) of the scanning beam (2000) is used as a source (30) of the fusion beam (3000).

6. Beam powder bed fusion additive manufacturing process according to one of the claims 1 to 5, wherein a scanning beam (2000) and/or a fusion beam (3000) are used which comprise at least one beam which is selected from the group consisting of a laser beam (2003) and an electron beam (2004).

7. Beam powder bed fusion additive manufacturing process according to one of the claims 3 to 6, wherein
an amount of the introduced heating energy (2001) is spatially and/or temporally modulated to supply the heat flux density distribution (40).

8. Beam powder bed fusion additive manufacturing process according to one of the claims 1 to 7, wherein for the heat flux density distribution (40) at least one beam characteristic (2002) of the heating beam (2000) is controlled which is selected from the group consisting of beam power, beam velocity and hatch distance (2005).

9. Beam powder bed fusion additive manufacturing process according to one of the claims 1 to 8, wherein a high temperature selective melting (1100) with a pre-heat temperature of the powdery precursor material (1011) of more than 500 °C is carried out.

10. Beam powder bed fusion additive manufacturing process according to one of the claims 1 to 9, wherein a processor (4000) with a job file (4001) is used and wherein the job file (4001) comprises information about at least one dimension (14) about the manufacturing part (21), about a range of a heating parameter (2006) of the introduction of the heating energy (2001), about a range of the fusion parameter (1006) and/or about the heat flux density distribution (40) of the manufacturing part (21).

11. Beam powder bed fusion additive manufacturing process according to claim 10, wherein a heat flux density distribution (40) to modulate the range of the heating parameter (2006) for the heating (1003) is used which is computed by a numeric simulation (1007).

12. Beam powder bed fusion additive manufacturing process according to one of the claims 1 to 11, wherein at least one three-dimensional object (2) is built on the substrate surface (12) the substrate (1).

13. Manufacturing device (5000) for an execution of a powder fusion additive manufacturing process (1000, 1100) according to one of the claims 1 to 12, **characterized in that** with the aid of the scanning beam the heating (1003) of the manufacturing part (21) of the component (2) by introduction of heating energy (2001) into the manufacturing part (21) is carried out such that the substantially homogenous temperature distribution (13) of the manufacturing part (21) during the fusion (1005) can result.
